# EUROPEAN PATENT SPECIFICATION

(11) **EP 4 072 928 B1**
(45) Date of publication and mention of the grant of the patent: **15.11.2023**
(21) Application number: 20823961.6
(22) Date of filing: 11.12.2020
(51) Int. Cl.: B62D 55/28

(54) **SPIKE DEVICE FOR TRACKED VEHICLES, IN PARTICULAR FOR SNOW GROOMER VEHICLES, AND TRACKED VEHICLE COMPRISING A PLURALITY OF SUCH DEVICES**
SPIKE-VORRICHTUNG FÜR KETTENFAHRZEUGE, INSBESONDERE FÜR PISTENFAHRZEUGE, UND KETTENFAHRZEUG, DAS EINE MEHRZAHL SOLCHER VORRICHTUNGEN UMFASST
DISPOSITIF DE POINTE POUR VÉHICULES À CHENILLES, EN PARTICULIER POUR VÉHICULES DE TYPE DAMEUSE, ET VÉHICULE À CHENILLES COMPRENANT UNE PLURALITÉ DE TELS DISPOSITIFS

(30) Priority: 12.12.2019 IT 201900023796
(43) Date of publication of application: 19.10.2022
(73) Proprietor: PRINOTH S.p.A., 39049 Vipiteno (BZ) (IT)
(72) Inventor: GOGL, Andreas, 39040 Ratschings (BZ) (IT)
(74) Representative: Studio Torta S.p.A.
(86) International application number: PCT/IB2020/061847
(87) International publication number: WO 2021/117005

(56) References cited:
- EP-A2- 2 778 028
- WO-A2-2011/112986
- WO-A2-2012/097355
- US-A- 4 218 101
- US-A1- 2018 141 598
- US-B1- 6 352 319

## Description

### Cross-reference to related applications

This patent application claims priority from Italian patent application no. 102019000023796 filed on December 12, 2019.

### Technical field

The technical field related to the present invention is the technical field of tracked vehicles, i.e., those vehicles which usually operate in conditions such as to require the presence of tracks instead of the classic wheels to ensure correct and safe execution of the required activities. Within the technical field of tracked vehicles it is also possible to identify a specific subset in which the present invention finds its most advantageous application. This specific technical field is that relating to snow groomer vehicles. In detail, the present invention relates to a spike device, i.e., a device attached to the tracks of the tracked vehicle and configured to improve the grip of the tracks on the ground in certain conditions. For the purposes of the present invention, the term "ground" does not only mean the surface layer of the Earth's surface in the geological sense, it generally means the entity with which the track cooperates during the movement of the vehicle. Therefore, the ground according to the present invention is mainly a snowy and icy surface (with particular reference to snow groomer vehicles), but it can also be a grassy or muddy surface in forest or farming areas, or even a road surface made of concrete (the typical ground on which snow groomer vehicles travel during storage operations).

### State of the art

As indicated above, the preferred application of the present invention refers to the technical field of snow groomer vehicles, i.e., those tracked vehicles used for the preparation of ski slopes. Although the present invention can be applied to other tracked vehicles, for the sake of simplicity the following description will only refer to snow groomer vehicles. However, this exemplification does not limit the scope of protection of the present invention. In general, a tracked vehicle comprises a support frame or platform for one or two tracks mounted on the opposite sides of the frame and a driver's cabin mounted centrally on the support frame. Starting from this general structure, a snow groomer vehicle usually comprises one or more peculiar operating units, such as for example a tiller for working the snow cover, a shovel for moving masses of snow along the ski slopes, and a winch assembly to ensure the stability of the snow groomer vehicle on relatively steep slopes and prevent the snow groomer vehicle from slipping if it loses its grip to the snow.

Each track comprises a front wheel, a rear wheel and a plurality of belts arranged parallel to each other, spaced apart and looped around the wheels. The longitudinal direction of the belts is defined by their movement between the wheels and coincides with the direction of movement of the vehicle. Alternatively, each track can comprise a single belt which occupies the entire transverse direction (orthogonal to the longitudinal direction) of the respective track. Each track further comprises a plurality of transverse bars (also called cleats) fixed on the outer face of the belts and parallel to each other along the transverse direction. "Outer face" of the belt means the surface that faces the ground, or the snow if any, during the travel of the lower return branch, so that the bars can grip the ground or the snow of the ski slope, thereby acting as crampons. The rear wheel is generally a drive wheel, and for this reason has lobes which engage the spaces between the transverse bars or between the links of the chain, if present. The rotational motion is transmitted in a known way to the drive wheel by an engine, usually an internal combustion engine, which is housed in the frame of the tracked vehicle. Tracked vehicles are generally also provided with support wheels arranged between the rear wheel and the front wheel in order to keep the driving portion of the belt in contact with the ground and distribute the mass of the tracked vehicle over this driving portion.

The transverse bars can extend transversely over the whole transverse dimension of the track, thus coupling to all the belts, or they can have a smaller extent than the transverse dimension of the track, so that they are only coupled to some of the belts. In the latter case, the transverse bars can follow each other in a staggered manner along the longitudinal direction of the belts. Each transverse bar, as mentioned above, performs the function of a crampon and generally comprises a section bar made of steel, aluminium or aluminium alloy, with a substantially triangular shape. Therefore, each bar substantially comprises a front face, a rear face, a free edge for joining the faces and a base for coupling to the belts. Nowadays, the free edge of the bar along the transverse direction usually has a saw-tooth shape. This saw-toothed end edge can also be an element which is not made in one piece with the rest of the bar but joined to it later with screws or rivets passing through holes formed on one side face of the bar. Each transverse bar usually has an inner cavity, which extends through the section bar transversely to the direction of movement of the track and is laterally open at its opposite free ends. Commonly, the transverse bar is fastened to the belt by means of a plate inserted inside the cavity of the section bar and of an outer plate placed in contact with the belt on the opposite side with respect to the section bar. The inner plate can extend along a single belt or, as for the transverse bars, extend transversally such as to be coupled to more than one belt. The assembly defined by the inner and outer plates, the belt and the transverse bar is locked or packed together by means of a plurality of fastening screws passing through aligned holes made in the plates, the belt and the section bar. Of course, bolts, rivets or equivalent rod locking means can be used instead of screws.

Starting from this bar structure, in order to further enhance the grip of the tracked vehicle on the ground, each track further comprises spike devices coupled to the transverse bars. In the technical field of snow groomer vehicles, these spike devices are useful and ensure that the vehicle can be manoeuvred even in the case of extremely icy surfaces. Each spike device comprises a support to be attached to the transverse bar and a spike supported by the support so that it protrudes beyond the edge of the bar and penetrates the ground. Usually, the spike has a cylindrical shape with a pointed conical head. According to the prior art, the support is attached laterally to the bar. This coupling of the support to the bar can be achieved by means of screws or bolts passing through one or both of the side faces of the bar, or the support can be directly welded to one of the side faces of the bar. However, in both cases indicated above according to the prior art, the spike is made irreversibly integral with the support. The coupling of the support to the bar by means of screws or bolts is of the releasable type and allows the replacement of the spike device in case of breakage or damage. In fact, although on the one hand this device works in an excellent way in some conditions (for example on an icy surface), under other conditions (for example when driving on a road surface) it is often subject to breakage or damage.

Well, the above prior art has some drawbacks. In particular, the side holes made in the bar for supporting the spike support structurally weaken the bar and will be added to any other side holes already there for supporting the saw-toothed edge. Furthermore, the head ends of the screws or bolts fastening the support to the bar protrude laterally with respect to the bar, thereby generating an undesirable resistance to the penetration of the bar into the ground. Moreover, according to the prior art, in case of breakage or damage of the spike alone (in fact, often, only the pointed end of the spike breaks or gets damaged and not the support as well), now the entire spike device (i.e., the support and the spike made integral with it in an irreversible manner) needs to be replaced. In the event that the support is welded to the bar, the removal of the entire spike device requires long intervention times and is not easy to perform because it is necessary to operate in the small lateral space between adjacent bars in order to release this coupling between the bar and the support.
EP2778028A2 discloses a tracked vehicle comprising a plurality of transverse bars. According to one embodiment of EP2778028A2 the transverse bar is provided with a spike device comprising a support for a spike in form of two plates coupled to the lateral faces of the transverse bar. WO2012097355 discloses a tracked vehicle provided with detachable spikes.
US4218101 discloses a tracked vehicle comprising a plurality of transverse bars. The transverse bar of US4218101 is provided with spikes coupled to a lateral face of the transverse bar.

### General description of the invention

Starting from this prior art, one object of the present invention is to provide a tracked vehicle, in particular a snow groomer vehicle, which is capable of overcoming the aforementioned drawbacks. In particular, the object of the present invention is to provide a spike device which, when installed on the related tracked vehicle, allows the procedures for replacing a damaged spike to be simplified.

In accordance with these objects, the present invention refers to a tracked vehicle, in particular a snow groomer vehicle, wherein the tracked vehicle is equipped with at least one track extending longitudinally (i.e., along the direction of movement of the vehicle) and comprising a plurality of transverse bars configured (as known) to act against or to grip the ground by penetrating into it, at least partially, during the movement of the tracked vehicle. As previously indicated, the term ground refers to a multiplicity of different conditions which may be a snow cover, an icy surface, as well as a road surface or the like. In fact, different tracked vehicles are mainly configured to travel on different types of grounds, and a single tracked vehicle can also travel at certain times on one type of ground under certain conditions and at other times on another type of ground under different conditions. For example, a tracked snow groomer vehicle usually travels on snow and is therefore designed considering that it will almost always be in this condition. However, at certain times, the same snow groomer vehicle is forced to deal with very different types of grounds, for example an icy snow cover in case of very cold temperatures or a road surface during storage operations. Obviously, the designer must take these possibilities into account and provide for suitable solutions. The provision of suitable spike devices coupled to the transverse bars of the tracks so that the snow groomer vehicle can be manoeuvred on an icy surface is well known. Each spike device comprises:
- a support configured for being coupled to one of the transverse bars;
a spike supported by the support and configured for acting against the ground during the movement of the tracked vehicle.

In particular, as previously described, according to the prior art the support is screwed or welded to a side face of the transverse bar and the spike is made in one piece with the support in a non-releasable manner.

As mentioned, these spikes solve the problem related to the use of the vehicle on ice. However, when travelling on the road surface, these same spikes incur damage or breakage causing them to need replacement. As described above, this replacement requires the complete removal of the spike device (the support and the spike) from the transverse bars, with the related disadvantages and drawbacks.

In order to overcome these disadvantages and drawbacks, the spike of the spike device is supported by its own support (claimed as the "first support") in a selectively releasable manner so that in case of breakage or damage the spike can be replaced without also requiring the removal of the support from the transverse bar.

Advantageously, in this respect, the present invention relates to an interchangeable spike for tracked vehicles, thanks to which the procedures for replacing a broken or damaged spike can be carried out much more quickly.

The first support comprises a cylindrical body which defines a seat for the spike.

The coupling between the aforementioned cylindrical body and the spike is a threaded coupling.

Preferably, the first support is coupled to the bar in a non-releasable manner, for example through a welded coupling.

The spike (i.e., the releasable part of the spike device) can be made in one piece or in two pieces. In the latter case, it comprises a spike tip (i.e., a pointed cylindrical body) coupled in a non-releasable manner (preferably by welding, by bonding or by mechanical interference) to a second support (preferably in the form of a sleeve). In this case, it is the second support which is coupled in a selectively releasable manner (preferably by means of a threaded coupling) to the first support irreversibly fastened (preferably by welding) to the bar. In this example, to facilitate tightening, the second sleeve support may comprise a nut for coupling with tightening tools.

The cylindrical body of the first support is configured to be coupled to the (optionally saw-toothed) free edge of the bar so that it has a vertical axis.

Preferably, the first support further comprises two lip portions coupled to the cylindrical body and configured for following the shape of the lateral walls of the transverse bar.

For the purposes of the present invention, the tracked vehicle comprises at least one track extending longitudinally and equipped with a plurality of transverse bars configured for acting against the ground during the movement of the tracked vehicle. The tracked vehicle also comprises a plurality of spike devices coupled to the bars.

The transverse bar can be a single body wherein the free edge is made in one piece with the lateral walls, or the transverse bar is made as a union of two separate bodies, one of which is the (optionally saw-toothed) free edge that supports the first support of the spike device.

### Description of one embodiment of the invention

Further features and advantages of the present invention will be apparent from the following description of a non-limiting embodiment thereof, with reference to the figures of the accompanying drawings, wherein:
- Figure 1 shows a schematic view of a snow groomer vehicle, i.e., a tracked vehicle which can be equipped with a plurality of spike devices;
- Figure 2 is a schematic view of a portion of a track of the snow groomer vehicle in Figure 1;

- Figure 3 is an enlarged schematic view of a portion of the track in Figure 2, i.e., a portion of a transverse bar of the track in Figure 2;
- Figure 4 is a schematic view of a transverse bar according to the present invention for a track of a tracked vehicle, preferably for a snow groomer vehicle;
- Figure 5 is an enlarged schematic view of the detail in Figure 4 indicated with the reference V, i.e., an enlarged schematic view of a first example of a spike device coupled to the respective transverse bar;
- Figure 6 is an enlarged schematic view of a second example of a spike device coupled to the respective transverse bar;
- Figure 7 is an exploded schematic view of the spike device in Figure 6;
- Figures 8 and 9 show schematic views of a first component of the spike device in Figures 6 and 7; i.e., an example of a support for a spike configured to be coupled to the respective transverse bar;
- Figures 10 and 11 show schematic views of a second and a third component of the spike device in Figures 6 and 7; i.e., a spike tip coupled to the respective sleeve, in turn configured to be coupled to the support of Figures 8 and 9.

With reference to the figures listed above, two embodiments of a spike device for a tracked vehicle will be described below. A snow groomer vehicle will also be described as a preferred example of a tracked vehicle integrated with a plurality of spike devices. Of course, the scope of protection of the present invention is not limited to the snow groomer vehicle but is defined by the attached claims which find broader support in the above general description of the invention.

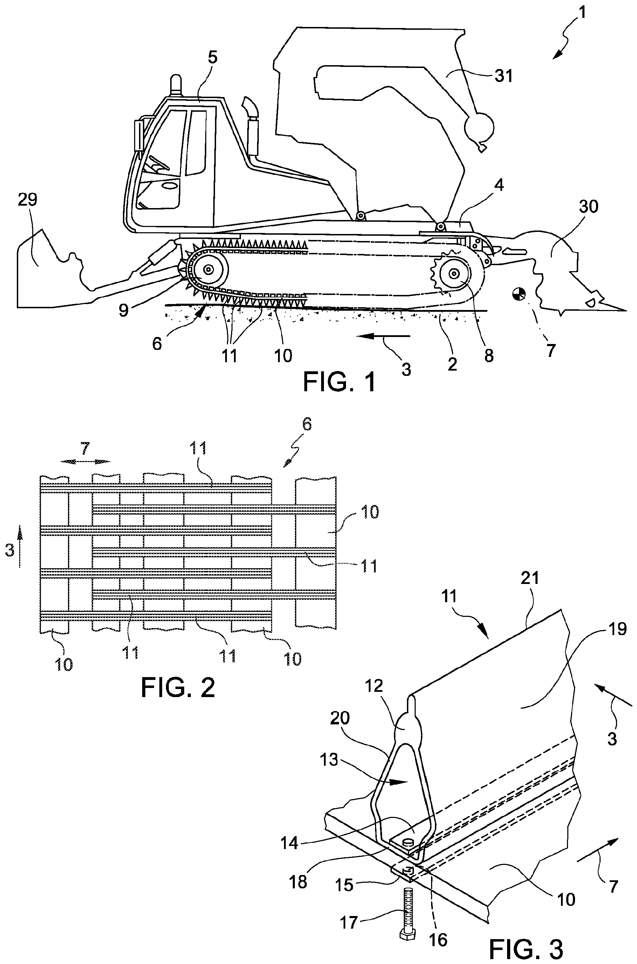

Referring to Figure 1, this figure shows a schematic view of a snow groomer vehicle, i.e., a tracked vehicle which can be equipped with a plurality of spike devices according to the present invention. This groomer vehicle 1 is a tracked vehicle and is motorized to move on the ground 2 in a direction of movement 3. As previously indicated, the term "ground" refers to a multiplicity of different surfaces on which the snow groomer vehicle travels. Usually, that is, during normal use, the ground is a snow cover, but however the ground could be a different contact surface, even for example a hard surface such as asphalt. In fact, usually, the snow groomer vehicle at certain times is on the snow in an ideal condition for its operation, at other times it can be on an icy surface, so it needs a plurality of spike devices, and at other times still (for example during storage) it travels on concrete, and in such a condition the aforementioned spike devices can be damaged or broken. Incidentally, the present invention fits in this circumstance so that the breaking and the related fixing of the damaged spike device can also take place in a simple and quick manner. Naturally, the direction of movement 3 can also be different from the indicated direction, i.e., for example, the groomer vehicle 1 can also move in reverse. The snow groomer vehicle 1 in Figure 1 comprises a milling cutter 30 for working the snow cover 2, a shovel 29 for moving masses of snow and a winch assembly 31. The snow groomer vehicle 1 in Figure 1 further comprises a support frame 4, a driver's cabin 5 mounted on the support frame 4 and two tracks 6 mounted on opposite sides of the support frame 4. Each track 6 comprises a plurality of belts 10 looped between a front wheel 9 and a rear wheel 8. Furthermore, each track 6 comprises a plurality of transverse bars 11 fixed to the belts 10. The direction of movement of the belts 10 defines the direction that will be indicated in the following description as the longitudinal direction 3, whereas the axes of rotation of the wheels 8, 9 define the transverse direction 7 orthogonal to the longitudinal direction 3.

Figure 2 shows a schematic view of a portion of a track of the snow groomer vehicle in Figure 1. Of course, the track in Figure 2 can also be mounted on snow groomer vehicles other than the example shown in Figure 1. In particular, Figure 2 shows a track 6 comprising a plurality of longitudinal belts 10 and a plurality of transverse bars 11 (i.e., along the transverse direction 7) parallel to each other and arranged in a staggered manner 11 along the longitudinal direction 3 with respect to the belts 10. This example is not limiting, and the tracked vehicle of the present invention can even comprise a single belt and transverse bars which extend along the entire transverse length of said belt.

Figure 3 shows an enlarged schematic view of a portion of the track in Figure 2, i.e., a perspective view of a portion of one end of a transverse bar of the track in Figure 2. According to the example in Figure 3, the bar 11 is fixed to the belt 10 by screws 17. In particular, the bar 11 comprises a section bar 12 equipped with a cavity 13 inside which a plate 14 is inserted. On the opposite side of the belt 10 and next to the position of this plate 14 a counter plate 15, or outer plate, is provided. The plates 14, 15, the section bar 12 and the belt 10 are provided with respective holes 16 which, when aligned, can accommodate the screws 17 to tighten the structure into a pack. As can be seen in Figure 3, the section bar 12 has a substantially triangular shape comprising a base 18 for coupling to the belt 10, two opposite inclined lateral walls 19, 20, and a tip 21 (actually a tip edge 21 along the transverse direction). In this example, the tip edge 21 is in one piece with the rest of the section bar and follows a straight line. However, the tip edge 21 could also be a separate body made integral with the section bar 12 by means of screws passing through at least one lateral wall. This embodiment allows the edge 21 to be replaced without requiring the complete removal of the bar.

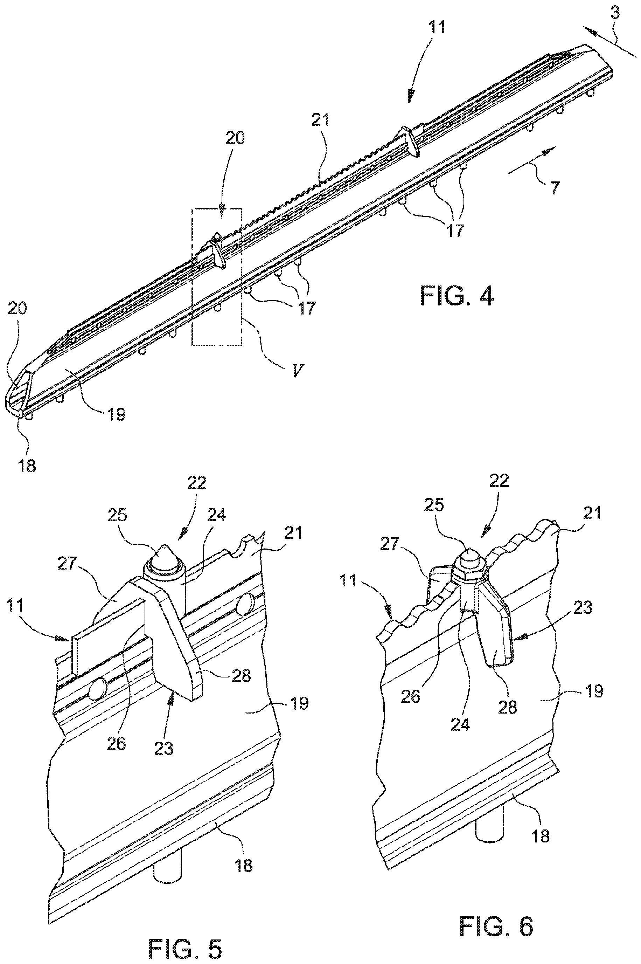

Figure 4 shows a schematic view of a transverse bar as just described in which the edge 21 is a separate body joined later to the rest of the bar 11. Furthermore, according to the example in Figure 4, the edge 21 has a saw-tooth shape. The bar in Figure 3 and that in Figure 4 are just two different examples of bars on which the spike devices 22 can be mounted. As is known, the spike devices for tracked vehicles of this type are bodies which have a pointed end which protrudes locally beyond the edge 21 of the bar and are kept in position by supports, which are in turn fixed to the section bar 12 (usually a lateral wall).

Figure 5 is an enlarged schematic view of the detail in Figure 4 indicated with the reference V, i.e., an enlarged schematic view of an example of a spike device coupled to the respective transverse bar. As can be seen, the spike device 22 in Figure 5 comprises a support 23 coupled to the bar 11 in an irreversible manner (preferably by welding). According to one aspect of the present invention, the support 23 is not coupled to the lateral walls 19, 20, but is coupled to the edge of the bar, in this case to the saw-toothed upper edge 21. As can be seen, the support 23 comprises a cylindrical body 24 which serves as a seat for a spike 25 and which in turn is housed in a seat formed on the edge 21 in the form of a depressed split, so that the axis of the cylindrical body 24 is substantially vertical. According to this example, the cylindrical body 24 is welded to the edge 21, but other types of fastenings could also be provided. Furthermore, as shown in the example, the support 23 also comprises a V-shaped plate defining two wings or lips 27, 28, opposite to each other and extending substantially vertically. These lips 27, 28 have an internal shape configured to be coupled (i.e., to follow the shape without interference) to the lateral walls 19, 20 of the bar 11. According to this example, the cylindrical body 24 is supported at the front by the plate (i.e., along the transverse direction 7). In this example, the spike 25 can be a single piece and is coupled (according to the main aspect of the present invention) in a releasable manner to the cylindrical body 24.

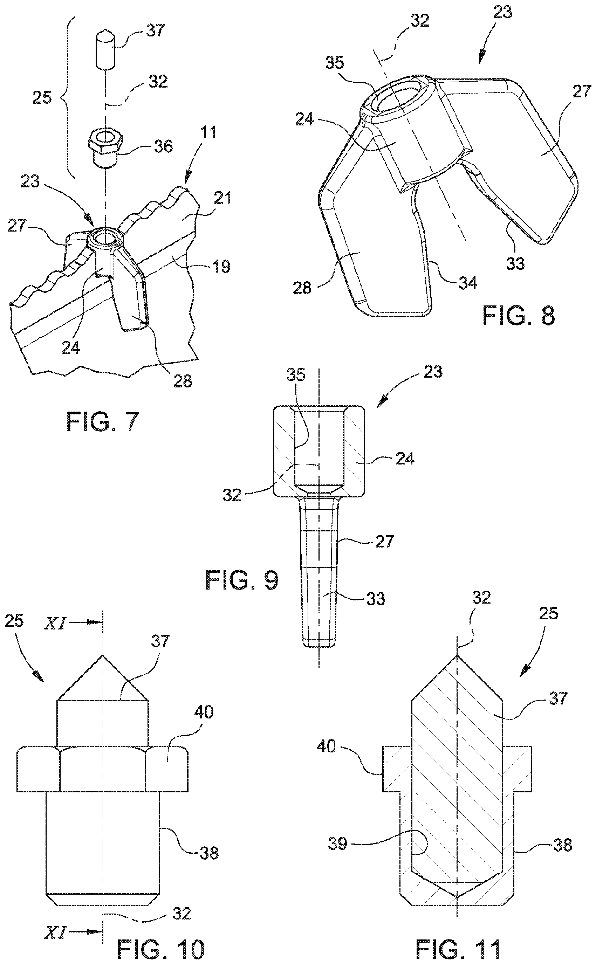

Figure 6 is an enlarged schematic view of a second embodiment of a spike device 22. In particular, this example differs from the previous one in the shape of the support and of the spike 25. This spike device also comprises a support 23 coupled to the bar 11 in an irreversible manner (by welding). According to the present invention (and therefore as can also be seen in Figure 6), the support 23 is not coupled to the lateral walls 19, 20, but is coupled to the upper edge 21 of the bar 11, in this case too, a saw-toothed edge. As can be seen, the support 23 comprises a cylindrical body 24 which serves as a seat for the spike 25 and which in turn is housed in a seat 26 formed on the edge 21 in the form of a depressed split, so that the axis 32 of the cylindrical body 24 is substantially vertical. As can be seen in this example, the support 23 also comprises two substantially vertically extending wings or lips 27, 28 connected to the cylindrical body 24 in diametrically opposite positions. These lips 27, 28 have an internal shape 33, 34 configured to be coupled (i.e., to follow the shape without interference) to the lateral walls 19, 20 of the bar 11. Figures 7 and 8 allow what is described in relation to the example of the support 23 in Figure 6 to be verified in greater detail.

In this example too, according to the main aspect of the present invention, the spike 25 is coupled to the seat 35 of the cylindrical body 24 in a releasable manner in a threaded manner.

Figure 7 shows an exploded view of the spike device in Figure 6 wherein the spike 25 is made by joining two pieces and comprises a bush or sleeve 36 (preferably closed on one side) and a spike tip 27. The bush 36 is a cylindrical body having an outer surface 38 configured to be coupled in a releasable manner to the cylindrical body 24 of the support 23 (for example by means of a thread on the external surface 38 of the sleeve 36 and a counter thread on the external surface of the seat 35 of the cylindrical body 24 of the support 23) and an inner surface 39 configured to be coupled in a non-releasable manner (for example by welding, bonding or mechanical interference) to the spike tip 37 (i.e., a cylindrical body with a pointed free end). Figures 10 and 11 allow what is described in relation to the example of the spike 25 in Figure 7 to be verified in greater detail. Naturally, a spike 25 as shown in Figures 6, 10 and 11 can also be coupled to supports having different shapes. For example, the two-piece spike 25 in Figures 6, 10 and 11 can be coupled to the support in Figure 5, and vice versa. Finally, the sleeve 36 of the two-piece spike 25 in Figures 6, 10 and 11 comprises an outer nut-shaped ring 40 configured to be coupled to coupling aids and a threaded release in the seat 35 of the cylindrical body 24 of the support 23.

## Claims

1. A tracked vehicle, in particular a snow groomer vehicle (1) comprising at least a track (6) having a longitudinal extent and provided with a plurality of transverse bars (11) configured for acting against the ground (2) during the movement of the tracked vehicle (1); the tracked vehicle (1) comprising moreover a plurality of spike devices coupled to the transverse bars (11) and configured for acting against the ground (2) during the movement of the tracked vehicle (1);
wherein each transverse bar (11) comprises a base (18) for coupling to a track belt (10), a free edge (21) and two lateral walls (19, 20); the spike devices (25) being coupled to the transverse bar at the free edge (21)
**characterised in that** at least one of the spike devices (22) comprises:
- a first support (23) comprising a cylindrical body (24) coupled to the transverse bars (11) at the free edge (21);
- a spike (25) supported by the first support (23) and configured for acting against the ground (2) during the movement of the tracked vehicle (1);
wherein the coupling between the first support (23) and the spike (25) is selectively releasable and made in a threaded manner about an axis (32) orthogonal to the belt (10).

2. The tracked vehicle as claimed in claim 1, wherein the first support (23) is coupled to the transverse bar (11) in a non-releasable manner, preferably with a welded coupling.

3. The tracked vehicle as claimed in any one of the foregoing claims, wherein the spike comprises a spike tip (37) coupled in a non-releasable manner to a second support (36), the second support (36) being coupled in a selectively releasable manner to the first support (23).

4. The tracked vehicle as claimed in claim 3, wherein the spike tip (37) is coupled by welding or by bonding or by mechanical interference to the second support (36).

5. The tracked vehicle as claimed in claim 3 or 4, wherein the coupling between the second support (36) and the first support (23) is a threaded coupling and the second support (36) comprises a tightening nut (40).

6. The tracked vehicle as claimed in claim 5, wherein the second support (38) is a sleeve and the first support (23) comprises a cylindrical body (24) that defines a seat (35) for receiving the second support (38).

7. The tracked vehicle as claimed in claim 1, wherein the transverse bar (11) is a single body wherein the free edge (21) is made in one piece with the lateral walls (19, 20) .

8. The tracked vehicle as claimed in claim 1, wherein the transverse bar (11) is made as a union of two separate bodies, one of which is the free edge (21).

9. The tracked vehicle as claimed in any one of the foregoing claims, wherein the first support (23) comprises two lip portions (26, 27) diametrically opposite with respect to the cylindrical body (24) and configured for following the shape of the lateral walls (19, 20) of the transverse bar (11).

## Patentansprüche

1. Kettenfahrzeug, insbesondere Pistenfahrzeug (1), aufweisend mindestens eine Kette (6), die eine Längserstreckung aufweist und mit einer Vielzahl von Querstangen (11) versehen ist, die konfiguriert sind, während der Bewegung des Kettenfahrzeugs (1) gegen den Boden (2) zu wirken; wobei das Kettenfahrzeug (1) ferner eine Vielzahl von Spike-Vorrichtungen aufweist, die mit den Querstangen (11) gekoppelt und konfiguriert sind, während der Bewegung des Kettenfahrzeugs (1) gegen den Boden (2) zu wirken;
wobei jede Querstange (11) eine Basis (18) zur Kopplung mit einem Kettenband (10), eine freie Kante (21) und zwei Seitenwände (19, 20) aufweist; wobei die Spike-Vorrichtungen (25) an der freien Kante (21) mit der Querstange gekoppelt sind,
**dadurch gekennzeichnet, dass** mindestens eine der -Vorrichtungen (22) aufweist:
- einen ersten Träger (23), der einen zylindrischen Körper (24) aufweist, der an der freien Kante (21) mit den Querstangen (11) gekoppelt ist;
- einen Spike (25), der durch den ersten Träger (23) getragen wird und konfiguriert ist, während der Bewegung des Kettenfahrzeugs (1) gegen den Boden (2) zu wirken;
wobei die Kopplung zwischen dem ersten Träger (23) und dem Spike (25) selektiv lösbar ist und um eine orthogonal zu dem Band (10) verlaufende Achse (32) aufgeschraubt erfolgt.

2. Kettenfahrzeug nach Anspruch 1, wobei der erste Träger (23) mit der Querstange (11) unlösbar, vorzugsweise mit einer Schweißkopplung, gekoppelt ist.

3. Kettenfahrzeug nach einem der vorhergehenden Ansprüche, wobei der Spike eine Spike-Spitze (37) aufweist, die mit einem zweiten Träger (36) unlösbar gekoppelt ist, wobei der zweite Träger (36) mit dem ersten Träger (23) selektiv lösbar gekoppelt ist.

4. Kettenfahrzeug nach Anspruch 3, wobei die Spike-Spitze (37) durch Schweißen oder durch Kleben oder durch mechanischen Eingriff mit dem zweiten Träger (36) gekoppelt ist.

5. Kettenfahrzeug nach Anspruch 3 oder 4, wobei die Kopplung zwischen dem zweiten Träger (36) und dem ersten Träger (23) eine Gewindekopplung ist und der zweite Träger (36) eine Spannmutter (40) aufweist.

6. Kettenfahrzeug nach Anspruch 5, wobei der zweite Träger (38) eine Hülse ist und der erste Träger (23) einen zylindrischen Körper (24) aufweist, der einen Sitz (35) zur Aufnahme des zweiten Trägers (38) definiert.

7. Kettenfahrzeug nach Anspruch 1, wobei die Querstange (11) ein einziger Körper ist, wobei die freie Kante (21) einstückig mit den Seitenwänden (19, 20) ausgebildet ist.

8. Kettenfahrzeug nach Anspruch 1, wobei die Querstange (11) als Verbindung von zwei getrennten Körpern hergestellt ist, von denen einer die freie Kante (21) ist.

9. Kettenfahrzeug nach einem der vorhergehenden Ansprüche, wobei der erste Träger (23) zwei Lippenabschnitte (26, 27) aufweist, die sich in Bezug auf den zylindrischen Körper (24) diametral gegenüberliegen und konfiguriert sind, der Form der Seitenwände (19, 20) der Querstange (11) zu folgen.

## Revendications

1. Véhicule à chenilles, en particulier un véhicule de type dameuse (1), comprenant au moins une chenille (6) comportant une étendue longitudinale et pourvue d'une pluralité de barres transversales (11) configurées pour agir contre le sol (2) pendant le déplacement du véhicule à chenilles (1) ; le véhicule à chenilles (1) comprenant en outre une pluralité de dispositifs de pointes couplés aux barres transversales (11) et configurés pour agir contre le sol (2) pendant le déplacement du véhicule à chenilles (1) ;
dans lequel chaque barre transversale (11) comprend une base (18) pour un couplage à une bande de chenille (10), un bord libre (21) et deux parois latérales (19, 20) ; les dispositifs de pointes (25) étant couplés à la barre transversale au niveau du bord libre (21),
**caractérisé en ce qu'**au moins l'un des dispositifs de pointes (22) comprend :
- un premier support (23) comprenant un corps cylindrique (24) couplé aux barres transversales (11) au niveau du bord libre (21) ;
- une pointe (25) supportée par le premier support (23) et configurée pour agir contre le sol (2) pendant le déplacement du véhicule à chenilles (1) ;
dans lequel le couplage entre le premier support (23) et la pointe (25) peut être sélectivement libéré et établi d'une manière filetée autour d'un axe (32) orthogonal à la bande (10).

2. Véhicule à chenilles selon la revendication 1, dans lequel le premier support (23) est couplé à la barre transversale (11) d'une manière non libérable, de préférence avec un couplage soudé.

3. Véhicule à chenilles selon l'une quelconque des revendications précédentes, dans lequel la pointe comprend un bout de pointe (37) couplé d'une manière non libérable à un second support (36), le second support (36) étant couplé d'une manière sélectivement libérable au premier support (23).

4. Véhicule à chenilles selon la revendication 3, dans lequel le bout de pointe (37) est couplé par soudage ou par adhérence ou par interférence mécanique au second support (36).

5. Véhicule à chenilles selon la revendication 3 ou 4, dans lequel le couplage entre le second support (36) et le premier support (23) est un couplage fileté et le second support (36) comprend un écrou de serrage (40) .

6. Véhicule à chenilles selon la revendication 5, dans lequel le second support (38) est un manchon et le premier support (23) comprend un corps cylindrique (24) qui définit un siège (35) pour recevoir le second support (38).

7. Véhicule à chenilles selon la revendication 1, dans lequel la barre transversale (11) est un corps unique dans lequel le bord libre (21) est constitué d'un seul tenant avec les parois latérales (19, 20).

8. Véhicule à chenilles selon la revendication 1, dans lequel la barre transversale (11) est constituée sous forme d'un raccord de deux corps distincts, l'un d'eux étant le bord libre (21).

9. Véhicule à chenilles selon l'une quelconque des revendications précédentes, dans lequel le premier support (23) comprend deux parties de lèvre (26, 27) diamétralement opposées par rapport au corps cylindrique (24) et configurées pour suivre la forme des parois latérales (19, 20) de la barre transversale (11) .
